# EUROPÄISCHE PATENTSCHRIFT

(11) **EP 0 581 205 B1**
(45) Veröffentlichungstag und Bekanntmachung des Hinweises auf die Patenterteilung: **18.09.1996**
(21) Anmeldenummer: 93111791.5
(22) Anmeldetag: 23.07.1993
(51) Int. Cl.: H05B 37/02, H02M 5/257, H02B 1/052

(54) **Elektrisches Installationsgerät**
Electrical installation equipment
Ustensiles d'installation électrique

(30) Priorität: 28.07.1992 DE 9210101 U
(43) Veröffentlichungstag der Anmeldung: 02.02.1994
(73) Patentinhaber: ABB PATENT GmbH, D-68309 Mannheim (DE)
(72) Erfinder: Bang, Bui Huu, D-44149 Dortmund (DE)
(74) Vertreter: Rupprecht, Klaus, Dipl.-Ing.

(56) Entgegenhaltungen:
- EP-A- 0 435 224
- EP-A- 0 444 635
- DE-A- 3 614 433
- DE-B- 2 422 060
- US-A- 3 846 671
- US-A- 4 733 138

## Beschreibung

Die Erfindung betrifft ein elektrisches Installationsgerät für die stufenlose Einstellung der Lastwerte elektrischer Verbraucher in einem Wechselstromnetz zwischen einem unteren und einem oberen Grenzwert, insbesondere Dimmer für Leuchtmittel, mit Anschlüssen für wenigstens einen Verbraucher sowie mit einer Schaltungsanordnung nach dem Phasenanschnittprinzip.

Elektrische Installationsgeräte zum stufenlosen Einstellen elektrischer Kennwerte sind als Drehzahlsteller oder Helligkeitssteller bzw. Dimmer bekannt, z.B. aus dem Dokument US-A-4 733 138.

Diese werden im allgemeinen anstelle von herkömmlichen Schaltern, z. B. Einzel-, Serien- oder Wechselschaltern, jeweils in dem Raum, in welchem sich der Verbraucher, hier die betreffende Lampe, befindet, am vorgeschriebenen Wandeinbauort installiert. Sie enthalten dabei sämtliche zur stufenlosen Einstellung erforderlichen Schaltungsbauteile. Abhängig von der zugrundeliegenden Schaltung, nämlich ob ein Ein-/Ausschalter vorgesehen ist oder nicht, wird bei Betätigung des entsprechenden herkömmlichen Lichtstellers der gewünschte Einstellwert von 0 ausgehend angesteuert. Bei Installationsgeräten mit eingebauten Schaltern wird durch Betätigung des Schalters zunächst ein beliebiger Einstellwert eingeschaltet, der anschließend auf den gewünschten Einstellwert zu korrigieren ist.

Andererseits besteht mitunter das Bedürfnis nach der Möglichkeit, Einstellwerte innerhalb eines bestimmten Bereiches anzuwählen, was mit den herkömmlichen Geräten nicht gewährleistet ist.

Ausgehend von diesem Stand der Technik ist es daher Aufgabe der Erfindung, ein Installationsgerät der eingangs genannten Art zu schaffen, mit welchem ein bestimmter Einstellbereich definiert werden kann.

Diese Aufgabe wird erfindungsgemäß durch die kennzeichnenden Merkmale des Patentanspruchs 1 gelöst. Danach ist vorgesehen, daß jeweils der untere und /oder der obere Grenzwert für die Verbrauchslast festvoreinstellbar sind, zwischen denen die stufenlose Lastwerteinstellung möglich ist.

Gemäß einer bevorzugten Ausführungsform der Erfindung ist eine Speicherschaltung vorgesehen zur Speicherung der eingestellten Grenzwerte.

In zweckmäßiger Ausgestaltung der Erfindung kann die Einstellung der Grenzwerte mittels anschließbarem Einstelltaster oder Potentiometer vorgesehen sein. Darüberhinaus kann auch vorgesehen sein, daß in einem Gerät Anschlußmöglichkeiten sowohl für Taster als auch für Potentiometer vorgesehen sind, wobei jedoch die Einstellung der Grenzwerte nur alternativ möglich ist.

Zur Speicherung des jeweils eingestellten Lastwertes als oberer oder als unterer Grenzwert sind gemäß einer bevorzugten Ausgestaltung der Erfindung entsprechend zugeordnete Taster am Gerät vorgesehen, d. h. je einen für den unteren und für den oberen Grenzwert. Diese Taster können als Druck- oder als Sensortaster ausgebildet sein.

Für die Speicherung eines vorgesehenen Einstellwertes als oberer oder als unterer Grenzwert ist die Betätigung des zugeordneten Tasters erforderlich, wobei nach erneuter Betätigung dieses Tasters der gespeicherte Einstellwert gelöscht wird.

In weiterer Ausgestaltung der Erfindung ist vorgesehen, daß bei Leerlaufbetrieb eines angeschlossenen Transformators, z. B. für Niedervolt-Halogenlampen, eine selbsttätige Abschaltung des Installationsgerätes erfolgt und seine Wiedereinschaltung erst nach Vorliegen bestimmter Bedingungen möglich ist. Hierdurch ist sichergestellt, daß weder der Transformator noch das Installationsgerät infolge zu hoher Strombelastung zerstört werden.

Ferner kann in zweckmäßiger Weiterbildung der Erfindung eine temperaturabhängige Leistungsanpassung im Installationsgerät vorgesehen sein, wonach bei erhöhter Umgebungstemperatur seine Leistung reduziert wird. Hierbei kann vorgesehen sein, daß innerhalb eines bestimmten Temperaturintervalls eine lineare Leistungsreduzierung bis auf 0 stattfindet.

Eine bevorzugte Ausführungsform der Erfindung sieht vor, daß das Installationsgerät als Reiheneinbaugerät zum Einbau in einen Zählerplatz, eine Verteilung oder Unterverteilung ausgebildet ist und mit einer Klemmbefestigung für Tragschienen versehen ist. Im Hinblick auf die weitverbreitete Standardisierung ist ferner vorgesehen, daß die Gehäuseabmessungen des Installationsgerätes an die Normmaße für Reiheneinbaugeräte in Schmalbauweise angepaßt sind, wobei die Breite des Installationsgerätes an die Modulbreiten (17,5 mm) der standardisierten Reiheneinbaugeräte angepaßt ist.

Ein besonderer Vorteil der Erfindung besteht ferner darin, daß die Schalt- bzw. Dimmleistung des Installationsgerätes durch Parallelbetrieb von wenigstens zwei Installationsgeräten auf gleicher oder unterschiedlicher Stromphase erweiterbar ist. Dabei erfolgt der Parallelbetrieb der Installationsgeräte durch Parallelschaltung der entsprechenden Steuereingänge.

Diese und weitere vorteilhafte Ausgestaltungen der Erfindung sind Gegenstand der Unteransprüche.

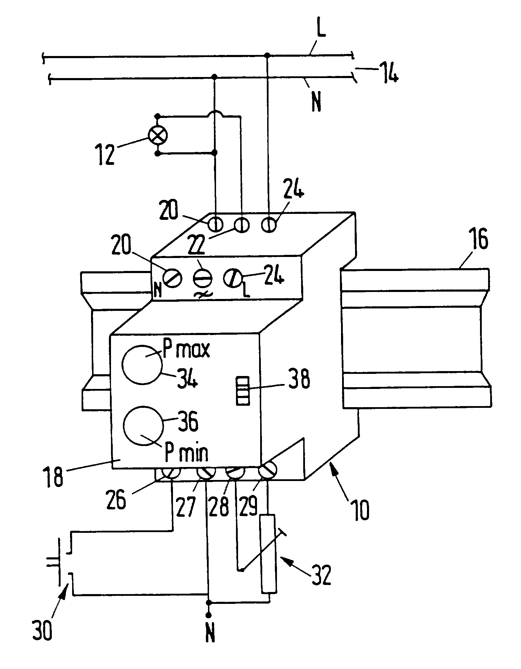

Anhand eines in der Zeichnung dargestellten Ausführungsbeispieles sollen die Erfindung, besondere Vorteile und Verbesserung der Erfindung näher erläutert und beschrieben werden.

Es zeigt die einzige Figur ein erfindungsgemäßes Installationsgerät auf einer Tragschiene installiert.

Ein Installationsgerät 10 zur stufenlosen Einstellung des Lastwertes eines Verbrauchers 12, der aus einem Wechselstromnetz 14 gespeist wird, ist auf einer Tragschiene 16 befestigt.

Das Installationsgerät 10 besitzt ein Gehäuse 18, welches hinsichtlich seiner Kontur sowie seiner Abmessungen an die standardisierten Reiheneinbaugeräte in Schmalbauweise angepaßt ist. An seiner Oberseite besitzt das Installationsgerät 10 Anschlußklemmen 20, 22, 24, welche einerseits zum Anschluß des Versorgungsnetzes 14 und andererseits zum Anschluß des Verbrauchers 12 dienen. Dabei ist der Nulleiter "N", der auf Anschlußklemme 20 geschaltet ist, unmittelbar mit dem Verbraucher 12 verbunden. Außerdem ist der Verbraucher 12 mit der Anschlußklemme 22 des Installationsgeräts 10 verbunden, welche als Ausgang der im Installationsgerät 10 enthaltenen nicht näher dargestellten Dimmerschaltung geschaltet ist, wobei die Anschlußklemme 24 als Eingang für den Leiter "L" des Versorgungsnetzes 14 geschaltet ist.

Während die im oberen Bereich des Installationsgeräts 10 angeordneten Anschlußklemmen 20, 22, 24 mit dem Versorgungsnetz 14 und dem Verbraucher 12 verbunden sind, befinden sich im unteren Bereich des Gehäuses 18 des Installationsgeräts 10 vier weitere Anschlußklemmen 26, 27, 28, 29, welche zur Ansteuerung der zuvor erwähnten, nicht näher gezeigten Dimmerschaltung im Installationsgerät 10 dienen. Dabei ist vorgesehen, daß entweder die Anschlußklemmen 26 und 27 mittels eines Einstelltasters 30 kurzgeschlossen werden, wobei an Anschlußklemme 27 der Nulleiter liegt, oder daß Anschlußklemme 27 und 28 mittels eines Einstellpotentiometers 32 miteinander verbunden werden. Hierbei liegt an Anschlußklemme 28 der einstellbare Widerstand und an Anschlußklemme 29 der Gesamtwiderstand.

An der Vorderseite des Gehäuses 18 des Installationsgerätes 10 sind zwei Programmiertaster 34, 36 angeordnet, die ebenfalls mit der nicht näher gezeigten Schaltung im Inneren des Installationsgerätes 10 in Wirkverbindung stehen und dazu dienen, einen eingestellten Lastwert als oberen bzw. unteren Grenzwert zu speichern. Dabei dient die Programmiertaste 34 zur Speicherung der oberen Grenzwerte und die Programmiertaste 36 zur Speicherung der unteren Grenzwerte. werte. Die hierzu erforderliche Betätigungsdauer ist dabei sehr kurz (ca. 60 msec).

Zur Löschung eines eingestellten Lastwertes ist ebenfalls die zugeordnete Programmiertaste zu betätigen jedoch mit deutlich größerer Betätigungsdauer (> 400 msec).

Zusätzlich befindet sich ebenfalls an der Vorderseite des Gehäuses 18 des Installationsgerätes 10 ein Schiebeschalter 38, der als Umschalter für die wahlweise Ansteuerung der Programmierschaltung mittels Einstelltaster 30 oder Einstellpotentiometer 32 dient.

Stattdessen kann unter Verzicht auf einen solchen Umschalter 38 vorgesehen sein, daß die Betriebsartwahl, nämlich die Einstellung mittels der Taster (vor Ort) oder mittels Potentiometer (von fern), selbsttätig erfolgt. Dabei erfolgt die Auswahl, d. h. Umschaltung auf die jeweilige Betriebsart, durch erstmalige Betätigung des jeweiligen Einstellorgans nach Einschalten der Spannung. Diese so vorgewählte Auswahl bleibt bestehen bis zu einer Spannungsunterbrechung > 200msec. z. B. infolge Ausschalten oder Netzausfall.

Das zur Fernbetätigung vorgesehene Potentiometer 32 kann auch als sogenanntes Potentiometer-Steuergerät aus einer Reihenschaltung von Trimmwiderständen und Potentiometern gebildet sein.

Je nach Ausgestaltung des erfindungsgemäßen Installationsgerätes 10 kann also entweder zwischen voreingestellten unteren und oberen Grenzwerten oder zwischen einem für den betreffenden Gerätetyp festen unteren und einem voreinstellbaren oberen Grenzwert bzw. zwischen einem voreinstellbaren unteren und einem oberen Grenzwert der jeweils gewünschte Lastwert ebenfalls voreinstellbar oder gerätespezifisch vorgegeben sein.

## Patentansprüche

1. Elektrisches Installationsgerät (10) für die stufenlose Einstellung der Lastwerte elektrischer Verbraucher (12) in einem Wechselstromnetz (14) zwischen einem unteren und einem oberen Grenzwert, insbesondere Dimmer für Leuchtmittel, mit Anschlüssen (20, 22, 24) für wenigstens einen Verbraucher (12) und für das Versorgungsnetz (14) sowie mit einer Schaltungsanordnung nach dem Phasenanschnittprinzip, dadurch gekennzeichnet, daß jeweils der untere und/oder der obere Grenzwert für die Verbrauchslast festvoreinstellbar sind, zwischen denen die stufenlose Lastwerteinstellung möglich ist.

2. Elektrisches Installationsgerät nach Anspruch 1, dadurch gekennzeichnet, daß eine Speicherschaltung vorgesehen ist zur Speicherung der eingestellten Grenzwerte.

3. Elektrisches Installationsgerät nach Anspruch 1 oder 2, dadurch gekennzeichnet, daß die Einstellung der Grenzwerte mittels wenigstens einer anschließbaren Einstelltaste (30) vorgesehen ist.

4. Elektrisches Installationsgerät nach Anspruch 1 oder 2, dadurch gekennzeichnet, daß die Einstellung der Grenzwerte mittels wenigstens eines anschließbaren Einstellpotentiometers (32) vorgesehen ist.

5. Elektrisches Installationsgerät nach einem der vorherigen Ansprüche, dadurch gekennzeichnet, daß zur Speicherung des eingestellten Lastwerts als oberer oder unterer Grenzwert entsprechend zugeordnete Programmiertaster (34, 36) vorgesehen sind.

6. Elektrisches Installationsgerät nach einem der vorherigen Ansprüche, dadurch gekennzeichnet, daß die Speicherung eines eingestellten Lastwertes als oberer oder unterer Grenzwert durch Betätigung des zugeordneten Programmiertasters (34, 36) erfolgt.

7. Elektrisches Installationsgerät nach einem der vorherigen Ansprüche, dadurch gekennzeichnet, daß die Löschung eines gespeicherten Einstellwertes durch Betätigung des zugeordneten Programmiertasters (34, 36) erfolgt.

8. Elektrisches Installationsgerät nach einem der vorherigen Ansprüche, dadurch gekennzeichnet, daß bei Leerlaufbetrieb eines angeschlossenen Transformators, z. B. für Niedervolt-Halogenlampen, eine selbsttätige Abschaltung des Installationsgerätes erfolgt und die Wiedereinschaltung erst nach Vorliegen bestimmter Bedingungen möglich ist.

9. Elektrisches Installationsgerät nach einem der vorherigen Ansprüche, dadurch gekennzeichnet, daß die Nennleistung des Installationsgerätes bei erhöhter Umgebungstemperatur reduziert ist.

10. Elektrisches Installationsgerät nach einem der vorherigen Ansprüche, dadurch gekennzeichnet, daß eine lineare Leistungsreduzierung entsprechend der jeweiligen Höhe der Umgebungstemperatur vorgesehen ist.

11. Elektrisches Installationsgerät nach einem der vorherigen Ansprüche, dadurch gekennzeichnet, daß das Installationsgerät (10) als Reiheneinbaugerät zum Einbau in einen Zählerplatz, in eine Verteilung oder Unterverteilung ausgebildet ist.

12. Elektrisches Installationsgerät nach Anspruch 11, dadurch gekennzeichnet, daß das Installationsgerät (10) mit einer Klemmbefestigung für Tragschienen (16) versehen ist.

13. Elektrisches Installationsgerät nach Anspruch 12, dadurch gekennzeichnet, daß das Installationsgerät (10) ein Gehäuse (18) besitzt, dessen Breite ein Vielfaches der Modulbreite von 17,5 mm beträgt.

14. Elektrisches Installationsgerät nach einem der vorherigen Ansprüche, dadurch gekennzeichnet, daß die Dimmleistung des Installationsgerätes (10) durch Parallelbetrieb von wenigstens zwei Installationsgeräten (10) auf gleicher oder unterschiedlicher Stromphase erweiterbar ist.

15. Elektrisches Installationsgerät nach Anspruch 14, dadurch gekennzeichnet, daß bei Parallelbetrieb von Installationsgeräten (10) die Parallelschaltung der entsprechenden Steuereingänge (26, 27, 28, 29) vorgesehen ist.

## Claims

1. Electrical service device (10) for infinitely variable adjustment of the load levels of electrical loads (12) in an AC network (14) between a lower limit and an upper limit value, in particular a dimmer for lighting means, having connections (20, 22, 24) for at least one load (12) and for the supply network (14), and having a circuit arrangement using the phase-gating principle, characterized in that the lower limit value and/or the upper limit value for the load, between which limit values the infinitely variable load setting is possible, can in each case be permanently preset.

2. Electrical service device according to Claim 1, characterized in that a memory circuit is provided for storage of the set limit values.

3. Electrical service device according to Claim 1 or 2, characterized in that the setting of the limit values is provided by means of at least one setting button (30) which can be connected.

4. Electrical service device according to Claim 1 or 2, characterized in that the setting of the limit values is provided by means of at least one setting potentiometer (32) which can be connected.

5. Electrical service device according to one of the preceding claims, characterized in that appropriately assigned programming buttons (34, 36) are provided for storage of the set load as the upper or lower limit value.

6. Electrical service device according to one of the preceding claims, characterized in that the storage of a set load as the upper or lower limit value is carried out by operating the associated programming button (34, 36).

7. Electrical service device according to one of the preceding claims, characterized in that a stored setting value is deleted by operating the associated programming button (34, 36).

8. Electrical service device according to one of the preceding claims, characterized in that the service device is automatically turned off when a connected transformer, for example, for low voltage halogen lamps. is operating on no-load, and switching-on again is not possible until specific conditions are present.

9. Electrical service device according to one of the preceding claims, characterized in that the rated power of the service device is reduced at a raised ambient temperature.

10. Electrical service device according to one of the preceding claims, characterized in that a linear power reduction is provided, corresponding to the respective magnitude of the ambient temperature.

11. Electrical service device according to one of the preceding claims, characterized in that the service device (10) is designed as a row-mounted device for installation in a meter mounting board, in a distribution board or in a sub-distribution board.

12. Electrical service device according to Claim 11, characterized in that the service device (10) is provided with a clamp attachment for supporting rails (16).

13. Electrical service device according to Claim 12, characterized in that the service device (10) has a housing (18) whose width is a multiple of the module width of 17.5 mm.

14. Electrical service device according to one of the preceding claims, characterized in that the dimming power of the service device (10) can be extended by parallel operation of at least two service devices (10) on the same or a different electrical phase.

15. Electrical service device according to Claim 14, characterized in that the parallel connection of corresponding control inputs (26, 27, 28, 29) is provided for parallel operation of service devices (10).

## Revendications

1. Appareil d'installation (10) électrique pour le réglage progressif, entre un seuil inférieur et un seuil supérieur de la valeur de charge d'utilisateurs (12) électriques dans un réseau de courant alternatif (14), notamment gradateur de lumière pour des lampes, comportant des bornes de connexion (20, 22, 24) pour au moins un utilisateur (12) et pour le réseau d'alimentation (14) ainsi qu'un circuit travaillant selon le principe du découpage de phase, caractérisé par le fait que le seuil inférieur et/ou le seuil supérieur pour la charge utilisatrice peut/peuvent être préréglés fixes, seuils entre lesquels il est possible de régler de manière progressive la charge.

2. Appareil d'installation électrique selon la revendication 1, caractérisé par le fait qu'il est prévu un circuit de mémorisation pour la mémorisation des seuils réglés.

3. Appareil d'installation électrique selon la revendication 1 ou 2, caractérisé par le fait que le réglage des seuils est prévu à l'aide d'au moins une touche (30) de réglage connectable.

4. Appareil d'installation électrique selon la revendication 1 ou 2, caractérisé par le fait que le réglage des seuils est prévu à l'aide d'au moins un potentiomètre (32) de réglage connectable.

5. Appareil d'installation électrique selon l'une des revendications précédentes, caractérisé par le fait qu'il est prévu, pour la mémorisation de la valeur de charge préréglée, en tant que seuil supérieur ou inférieur, des touches de programmation (34, 36) associées.

6. Appareil d'installation électrique selon l'une des revendications précédentes, caractérisé par le fait que la mémorisation de la valeur de charge préréglée, en tant que seuil supérieur ou inférieur, a lieu par actionnement de la touche de programmation (34, 36) correspondante.

7. Appareil d'installation électrique selon l'une des revendications précédentes, caractérisé par le fait que l'effacement d'une valeur de réglage mémorisée a lieu par actionnement de la touche de programmation (34, 36) correspondante.

8. Appareil d'installation électrique selon l'une des revendications précédentes, caractérisé par le fait que dans le cas du fonctionnement à vide d'un transformateur connecté, par exemple pour des lampes halogènes à basse tension, la coupure de l'appareil d'installation est automatique et que la remise en service n'est possible qu'en présence de certaines conditions.

9. Appareil d'installation électrique selon l'une des revendications précédentes, caractérisé par le fait que la puissance nominale de l'Appareil d'installation électrique est abaissée lorsque la température ambiante augmente.

10. Appareil d'installation électrique selon l'une des revendications précédentes, caractérisé par le fait qu'il est prévu une réduction linéaire de la puissance en fonction de la valeur de la température ambiante.

11. Appareil d'installation électrique selon l'une des revendications précédentes, caractérisé par le fait que l'appareil d'installation (10) est agencé sous forme d'appareil à monter en rangée, dans un emplacement de compteur, dans un tableau de distribution ou dans un tableau de répartition.

12. Appareil d'installation électrique selon la revendication 11, caractérisé par le fait que l'appareil d'installation (10) est pourvu d'une fixation à serrage pour des rails supports (16).

13. Appareil d'installation électrique selon la revendication 12, caractérisé par le fait que l'appareil d'installation (10) comporte un boîtier (18) dont la largeur correspond à un multiple de la largeur d'un module de 17,5 mm.

14. Appareil d'installation électrique selon l'une des revendications précédentes, caractérisé par le fait que la puissance de gradation de l'appareil d'installation (10) peut être augmentée par l'utilisation en parallèle d'au moins deux appareils d'installation (10) sur la même phase ou sur des phases différentes du courant.

15. Appareil d'installation électrique selon la revendication 14, caractérisé par le fait que dans le cas du fonctionnement en parallèle d'appareils d'installation (10), il est prévu de brancher en parallèle les entrée de commande (26, 27, 28, 29) concernées.
